# FASCICULE DE BREVET EUROPEEN

(11) **EP 2 523 235 B1**
(45) Date de publication et mention de la délivrance du brevet: **07.12.2016**
(21) Numéro de dépôt: 12165548.4
(22) Date de dépôt: 25.04.2012
(51) Int. Cl.: H01M 2/10, H01M 6/50, H01M 10/48

(54) **DISPOSITIF D'ALIMENTATION EN ÉNERGIE ÉLECTRIQUE, EN PARTICULIER POUR DISPOSITIF D'ALARME AUTONOME**
VORRICHTUNG ZUM EINSPEISEN VON ELEKTRISCHER ENERGIE, INSBESONDERE FÜR UNABHÄNGIGE ALARMVORRICHTUNG
POWER SUPPLY DEVICE, IN PARTICULAR FOR SELF-CONTAINED ALARM DEVICE

(30) Priorité: 11.05.2011 FR 1154052
(43) Date de publication de la demande: 14.11.2012
(73) Titulaire: Hager Security, 38920 Crolles (FR)
(72) Inventeur: Laurens, Gaston, 38530 Pontcharra (FR); Dumas, Didier, 38650 Saint Michel les Portes (FR); Buiret, Jean-Luc, 38400 Saint Martin d´Heres (FR); Dromard, Jean-Claude, 38530 Chapareillan (FR)
(74) Mandataire: Nuss, Laurent

(56) Documents cités:
- EP-A1- 0 572 327
- WO-A1-2006/080737
- FR-A1- 2 957 201
- FR-A1- 2 957 202
- FR-A1- 2 957 203
- JP-A- S6 266 563
- JP-A- 2004 199 910
- US-A1- 2008 079 391

## Description

La présente invention concerne le domaine des dispositifs d'alimentation en énergie électrique utilisant des accumulateurs d'énergie électrique autonomes.

Le brevet US 2008/79391 décrit un sélecteur de modes de charge de batteries pouvant être installées sur un chargeur toujours en état de marche, dans lequel le sélecteur est muni d'un interrupteur sensible à un aimant, de telle sorte que si une batterie possède cet aimant, le sélecteur est placé sur un mode de charge et, si une batterie ne possède pas d'aimant, le sélecteur est placé sur un autre mode de charge.

Les brevets WO 2006/80737 et JP 2004/1999910 décrivent des packs de batteries protégés contre l'humidité par le fait qu'ils comprennent des interrupteurs internes qui sont connectés entre leurs plots de contact électrique extérieur et leurs éléments internes d'accumulation d'énergie électrique, qui sont normalement à l'état ouvert. Lorsque ces packs de batteries sont installés dans des appareils électriques portant de tels aimants, leurs interrupteurs passent à l'état fermé sous l'effet de ces aimants et ces appareils électriques sont alors alimentés par les éléments d'accumulation d'énergie électrique. Néanmoins, de tels appareils peuvent être utilisés lorsqu'ils sont munis de packs de batteries ne comprenant pas de tels interrupteurs.

Notamment dans le domaine des systèmes d'alarme pour la protection des personnes et des biens, il est impératif que les différents dispositifs constituant de tels systèmes, alimentés par des sources d'énergie électrique autonomes et communiquant entre eux généralement par ondes radioélectriques, soient en bon état de marche et protégés.

Des progrès ont permis d'atteindre un degré de fiabilité acceptable, notamment en ce qui concerne les moyens de détection, les moyens de traitement des données et les moyens de transmission d'alarmes et d'avertissements et les moyens d'alarme.

La présente invention a pour but d'améliorer encore la fiabilité de tels dispositifs.

Il est proposé un dispositif d'alimentation électrique selon la revendication 1 qui comprend un support muni d'un dispositif électronique à alimenter en énergie électrique et un pack de pile comprenant un carter et au moins un élément d'accumulation d'énergie électrique disposé dans le carter.

Le support et le pack de pile comprennent des moyens d'accouplement et de maintien réciproques dans une position d'accouplement et sont munis de moyens de contacts électriques réciproques qui sont respectivement reliés au dispositif électronique et à l'élément d'accumulation d'énergie électrique et qui sont en contact au moins dans ladite position d'accouplement de telle sorte que le dispositif électronique soit alimenté en énergie électrique par ledit élément d'accumulation d'énergie électrique.

Le support est muni d'au moins un élément détecteur relié au dispositif électronique et le pack de pile est muni d'au moins un élément détectable apte à agir sur l'élément détecteur lorsqu'ils sont en présence l'un de l'autre, l'élément détecteur étant apte à délivrer au dispositif électronique un signal de présence/d'absence de l'élément détectable en fonction de la présence/l'absence du pack de pile par rapport à ladite position d'accouplement de telle sorte que le dispositif électronique ne soit en état de marche que lorsqu'il reçoit un signal de présence.

Ainsi, il est possible de détecter la présence/l'absence de la pile électrique et de vérifier que le pack de pile est bien le bon, c'est-à-dire celui attendu et/ou de détecter si le pack de pile est extrait par une personne non autorisée ou malveillante, car, si ce n'est pas le cas, le dispositif électronique ne peut pas fonctionner normalement ou ne peut pas être mis en marche.

L'élément détectable est fixé sur le carter du pack de pile et l'élément détecteur est adapté pour délivrer un signal de présence lorsque le support et le pack de pile sont à ladite position d'accouplement ou déplacés l'un par rapport à l'autre entre ladite position d'accouplement et une position d'écartement prédéterminée, les moyens d'accouplement et de maintien réciproques comprenant des moyens pour maintenir en contact lesdits moyens de contact électrique réciproques lorsque le support et le carter du pack de pile sont déplacés l'un par rapport à l'autre entre ladite position d'accouplement et ladite position d'écartement prédéterminée et jusqu'à une position d'écartement supérieure plus éloignée de ladite position d'accouplement que ladite position d'écartement prédéterminée.

Selon une variante de réalisation, le carter du pack de pile comprend une partie mobile portant l'élément détectable et l'élément détecteur est adapté pour délivrer un signal de présence lorsque cette partie mobile est déplacée entre une position active et une position d'écartement prédéterminée par rapport à cette position active, les moyens d'accouplement et de maintien réciproques pouvant être adaptés pour maintenir en contact lesdits moyens de contact électrique réciproques lorsque la partie mobile est déplacée entre ladite position active et ladite position d'écartement prédéterminée et jusqu'à une position d'écartement supérieure plus éloignée de ladite position d'accouplement que ladite position d'écartement prédéterminée.

Ladite partie mobile peut comprendre un coulisseau.

Ladite partie mobile peut coopérer avec une partie du support pour maintenir le carter à ladite position d'accouplement lorsqu'elle est à ladite position active.

Un dispositif électronique est prévu pour détecter les états et les changements d'état de l'élément détecteur.

Le dispositif électronique est apte à générer un signal d'alarme lorsque l'élément détectable franchit dans le sens croissant une distance d'écartement prédéterminée par rapport à l'élément détecteur.

L'élément détecteur peut être un interrupteur magnétique ou un composant magnéto-résistif et l'élément détectable peut être un aimant.

L'élément détecteur peut être un interrupteur mécanique et l'élément détectable peut être un doigt.

L'élément détecteur peut être un capteur capacitif et l'élément détectable peut être un objet métallique.

L'élément détecteur peut être un composant électronique de réception et de décodage et l'élément détectable peut être un composant électronique apte à émettre un signal codé.

Il est également proposé un pack de pile pour ledit dispositif d'alimentation électrique, selon la revendication 11 qui comprend un carter et au moins un élément d'accumulation d'énergie électrique disposé dans le carter, ce carter étant muni de moyens de contact électrique extérieur reliés à l'élément d'accumulation et comprenant des moyens d'accouplement destinés à l'accouplement et au maintien du carter sur un support, le carter étant en outre muni d'au moins un élément détectable destiné à être détecté par au moins un élément détecteur du support lorsque cet élément détecteur est en présence de l'élément détectable.

L'élément détectable peut être solidaire du carter.

L'élément détectable peut être porté par une partie mobile du carter, formée par exemple par un coulisseau.

Le pack de pile peut présenter un espace pour la réception d'une partie de verrouillage de ladite partie mobile à une position avancée.

L'élément détectable du pack de pile peut comprendre un aimant, un doigt, un objet métallique ou un composant électronique.

Des dispositifs d'alimentation en énergie électrique vont maintenant être décrits à titre d'exemples non limitatifs, illustrés par le dessin dans lequel :
- la figure 1 représente une coupe transversale médiane d'un dispositif d'alimentation en énergie électrique comprenant un support et un pack de pile en position accouplée, selon I-I de la figure 3 ;
- la figure 2 représente une coupe longitudinale médiane du dispositif d'alimentation de la figure 1 en position intermédiaire d'accouplement ;
- la figure 3 représente une coupe longitudinale médiane du dispositif d'alimentation de la figure 1 en position accouplée, selon III-III de la figure 1 ;
- la figure 4 représente une vue en perspective du support du dispositif d'alimentation de la figure 1 ;
- la figure 5 représente une vue en perspective d'une plaque du support du dispositif d'alimentation de la figure 1 ;
- la figure 6 représente une autre vue en perspective du support du dispositif d'alimentation de la figure 1 ;
- la figure 7 représente une vue en perspective du pack de pile du dispositif d'alimentation de la figure 1 ;
- la figure 8 représente une autre vue en perspective du pack de pile du dispositif d'alimentation de la figure 1 ;
- la figure 9 représente une coupe longitudinale latérale du dispositif d'alimentation de la figure 1 en position intermédiaire d'accouplement ;
- la figure 10 représente une coupe longitudinale latérale du dispositif d'alimentation de la figure 1 en position accouplée, selon X-X de la figure 1 ;
- la figure 11 représente un schéma électronique du dispositif d'alimentation de la figure 1 ;
- la figure 12 représente une coupe transversale médiane d'un autre dispositif d'alimentation en énergie électrique comprenant un support et un pack de pile en position accouplée, selon XII-XII de la figure 14 ;
- la figure 13 représente une coupe transversale du dispositif d'alimentation de la figure 12 en position intermédiaire d'accouplement, selon XIII-XIII de la figure 14 ;
- la figure 14 représente une coupe longitudinale médiane du dispositif d'alimentation de la figure 1 en position intermédiaire d'accouplement, selon XIV-XIV de la figure 12 ;
- la figure 15 représente une coupe longitudinale médiane du dispositif d'alimentation de la figure 12 en position accouplée ;
- la figure 16 représente une vue en perspective du support du dispositif d'alimentation de la figure 12 ;
- la figure 17 représente une autre vue en perspective du support du dispositif d'alimentation de la figure 1 ;
- la figure 18 représente une vue en perspective du pack de pile du dispositif d'alimentation de la figure 12 ;
- la figure 19 représente une autre vue en perspective du pack de pile du dispositif d'alimentation de la figure 12 ;
- la figure 20 représente une vue de dessus partiellement en coupe du dispositif d'alimentation de la figure 12 en position intermédiaire d'accouplement ;
- la figure 21 représente une vue de dessus partiellement en coupe du dispositif d'alimentation de la figure 1 en position accouplée ; et
- la figure 22 représente un schéma électronique du dispositif d'alimentation de la figure 12.

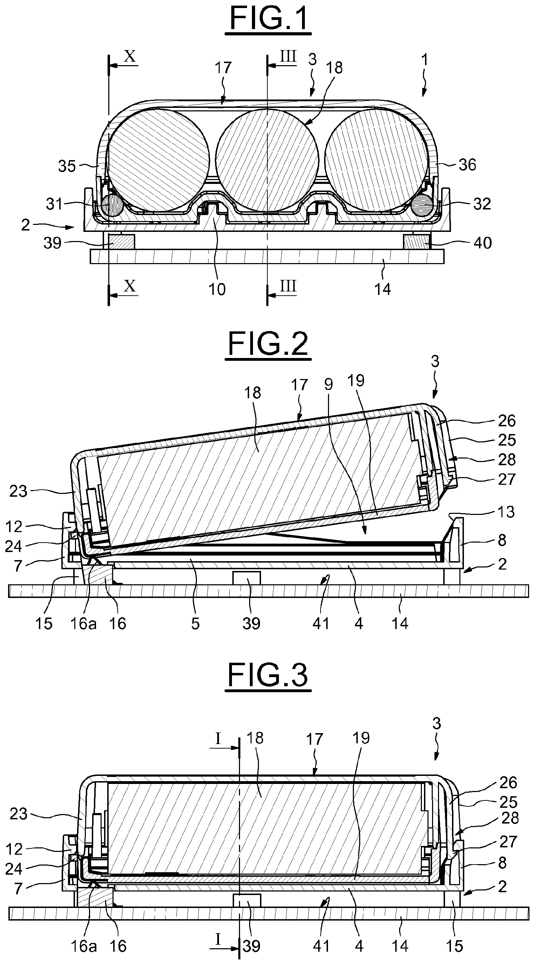

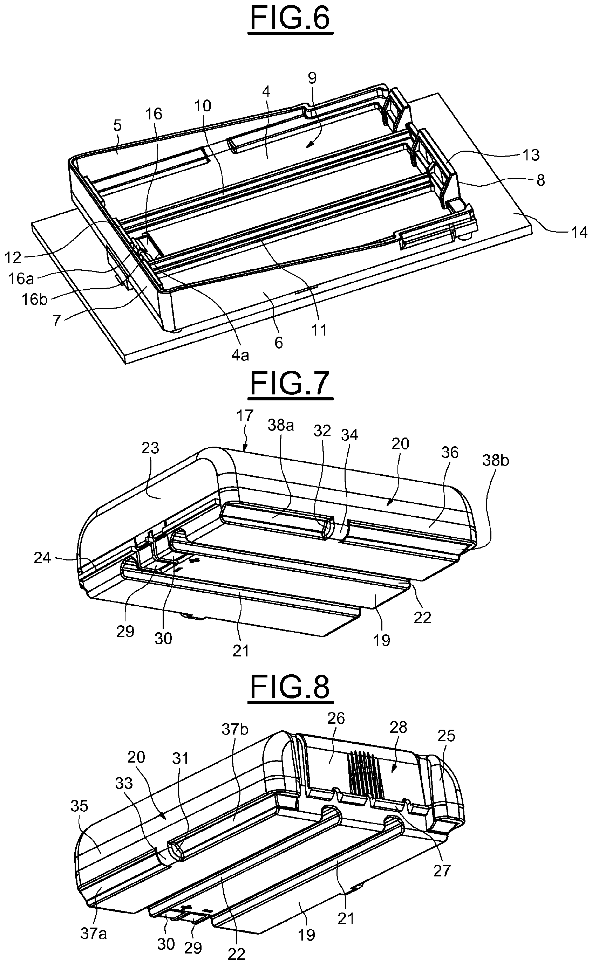

Un dispositif d'alimentation électrique 1 représenté sur les figures 1 à 11 comprend un support 2 et un pack de pile 3 pouvant être accouplé au support 2.

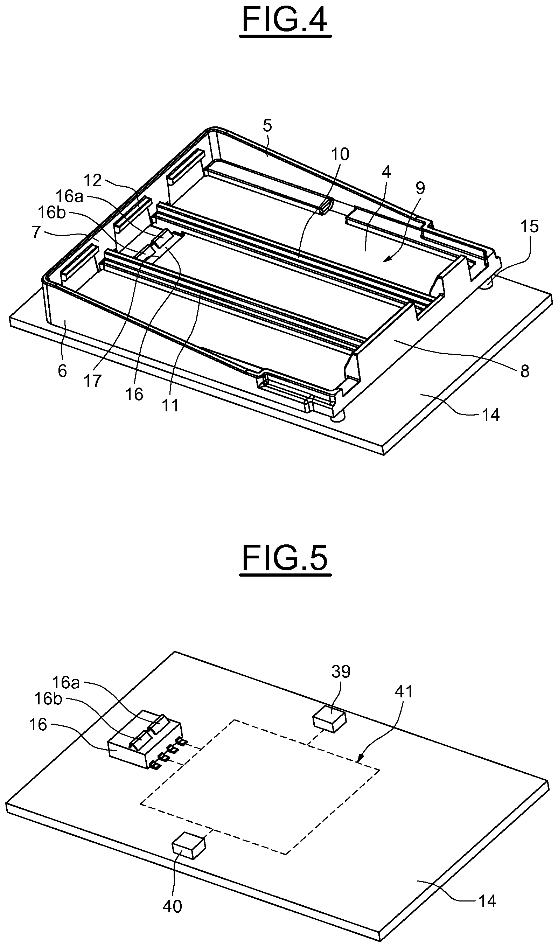

Comme illustré en particulier sur les figures 4 à 6, le support 2, par exemple en une matière plastique, comprend une plateforme 4 munie de rebords longitudinaux en saillie 5 et 6, d'un rebord transversal avant en saillie 7 et d'un rebord transversal arrière en saillie 8, délimitant un logement rectangulaire 9.

La plateforme 4 présente, dans ce logement 9, deux nervures longitudinales en saillie 10 et 11 espacées transversalement.

Du côté du logement 9 et à distance de la plateforme 4, le rebord transversal 7 est muni d'une nervure d'accrochage 12 et le rebord transversal 8 est muni d'une nervure d'accrochage 13, ces nervures 12 et 13 s'étendant parallèlement à la plateforme 4.

La plateforme 4 est montée, à distance et parallèlement, sur une plaque 14, par l'intermédiaire de pieds d'espacement 15.

La plaque 14 porte un organe de connexion électrique 16 qui est placé en regard d'une ouverture 4a aménagée au travers de la plateforme 4 du côté du rebord transversal 7 et au milieu de cette dernière. L'organe de connexion électrique 16 est muni de contacts électriques 16a et 16b qui sont en saillie dans le logement 9.

Comme illustré en particulier sur les figures 1, 7 à 8, le pack de pile 3 comprend un carter 17 de forme générale parallélépipédique, par exemple en une matière plastique, et, selon l'exemple représenté, trois éléments d'accumulation d'énergie électrique 18 installés longitudinalement dans le carter 17 les uns à côté des autres. Ces éléments accumulateurs peuvent être constitués par des piles ou des batteries.

Le carter 17 comprend une paroi plate 19 destinée à venir en vis-à-vis de la plateforme 4 du support 2 et un pourtour latéral 20 dimensionné de façon à pouvoir être engagé, avec un jeu, dans le logement 9 du support 2. La paroi plate 19 présente des rainures longitudinales 21 et 22. Le pourtour latéral 20 comprend une paroi transversale avant 23 présentant une nervure extérieure d'accrochage 24 qui s'étend parallèlement à la paroi plate 19, une paroi transversale arrière 25 munie d'un bras 26 qui est déformable élastiquement et qui présente, à son extrémité, une nervure extérieure d'accrochage 27 s'étendant vers la paroi plate 19 et parallèlement à cette face plate, de façon à former un crochet 28.

Du côté de la paroi transversale 23, la paroi plate 19 est munie de plots de contact électrique 29 et 30 qui sont reliés électriquement aux éléments d'accumulation d'énergie électrique 18 par des moyens non représentés.

Le pack de pile 3 peut être partiellement engagé dans le logement 9 du support 2 et accouplé au support 2 de la manière suivante.

Comme illustré sur la figure 2, on engage la partie avant du pack de pile 3 longitudinalement dans le logement 9 du support 2 en direction du rebord transversal 7 du support 2, dans une position inclinée telle que la partie avant de la paroi plate 19 du carter 17 située du côté de la paroi transversale avant 23 vienne sur la plateforme 4 et la paroi transversale du carter 17 vienne en butée contre le rebord transversal 7 du support 2, les parties correspondantes des rainures 21 et 22 venant sur les nervures 10 et 11.

Puis, comme illustré sur la figure 3, on engage la partie arrière du pack de pile 3 dans le logement 9 du support 2 en le faisant pivoter en direction de la plateforme 4. En position finale d'accouplement, la face plate 19 du carter 17 est au-dessus de la plateforme 4 et les nervures 10 et 11 de la plateforme 4 sont engagées dans les rainures 21 et 22. En outre, la nervure d'accrochage 24 du carter 17 s'est placée en prise au-dessous de la nervure d'accrochage 12 du rebord avant 7 du support 2 et la nervure d'accrochage 27 du crochet 28 s'est placée en prise au-dessous de la nervure d'accrochage 13 du rebord arrière 8 du support 2 par déformation du bras 26 d'arrière en avant puis d'avant en arrière. Le pack de pile 3 est alors maintenu dans le logement 9 du support 2, les plots de contact 29 et 30 du pack de pile 3 étant en contact sur les contacts électriques 16a et 16b de l'organe de connexion électrique 16 du support 2.

Pour extraire le pack de pile 3 du logement 9, on repousse le bras élastique 26 du crochet 28 de façon à libérer les nervures d'accrochage 24 et 27 l'une part rapport à l'autre et on déplace le pack de pile 3 de façon inverse à ce qui vient d'être indiqué, c'est-à-dire en relevant sa partie arrière puis en dégageant sa partie avant.

Approximativement à mi-longueur, le carter 17 du pack de pile 3 est muni d'éléments détectables 31 et 32, par exemple formés par des aimants cylindriques, qui sont montés longitudinalement dans les coins 33 et 34 de jonction de la paroi plate 19 et des parois longitudinales 35 et 36 du pourtour 20 du carter 17, le carter 17 présentant des rainures extérieures longitudinales 37a, 37b et 38a, 38b de part et d'autre de ces coins de jonction 33 et 34.

Comme illustré en particulier sur les figures 1, 5, 9 et 10, la plaque 14 porte, du côté de la plateforme 4, des éléments détecteurs 39 et 40, par exemple formés par des interrupteurs magnétiques (ILS) ou des éléments magnéto-résistifs. Ces éléments détecteurs sont disposés en correspondance longitudinale et transversale avec les éléments détectables 31 et 32 lorsque le pack de pile 3 est accouplé avec le support 2.

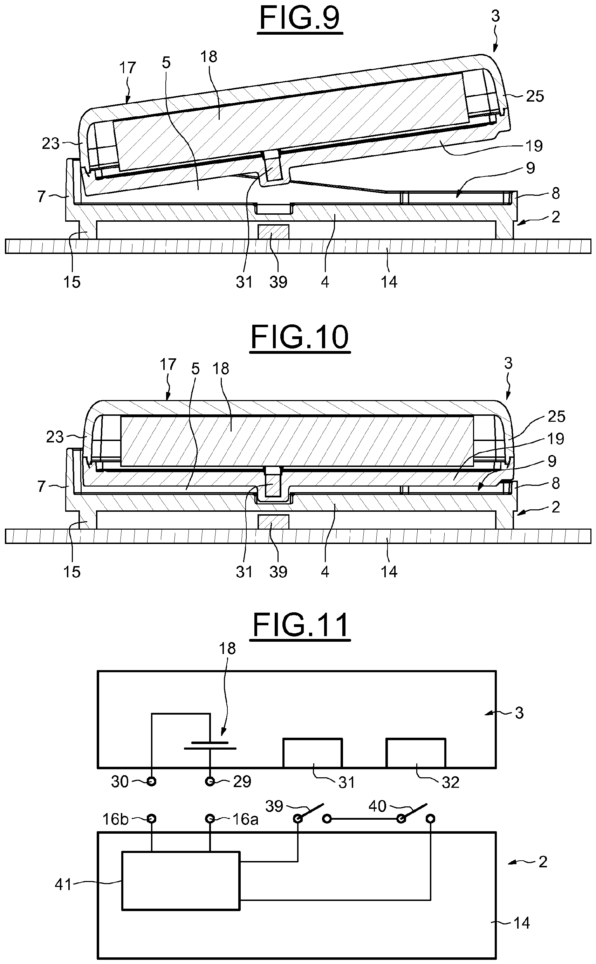

Comme illustré schématiquement en particulier sur les figures 5 et 11, la plaque 14 est munie d'un dispositif électronique 41 comprenant un circuit imprimé et des composants électroniques, reliés aux plots 16a et 16b de l'organe de connexion électrique 16 et aux éléments détecteurs 39 et 40 par exemple connectés en série.

Lorsque le pack de pile 3 est absent, le dispositif électronique 41 n'est pas alimenté en énergie électrique et ne fonctionne pas et les éléments détecteurs 39 et 40 formés par des interrupteurs magnétiques sont à l'état « ouvert ».

Lorsque le pack de pile 3 est accouplé au support 2 comme décrit précédemment (figures 3 et 10), le dispositif électronique 41 est alimenté en énergie électrique par la pile 18 par l'intermédiaire des plots 29 et 30 du pack de pile 3 en contact sur les plots 16a et 16b de l'organe de connexion électrique 16 du support 2.

Le dispositif électronique 41 comprend des moyens programmés pour vérifier l'état des éléments détecteurs 39 et 40 de façon à se placer en état de marche ou non.

Si les éléments détecteurs 39 et 40 du support 2, formés par des interrupteurs magnétiques, sont à l'état « fermé » sous l'effet des éléments détectables 31 et 32, formés par des aimants, du pack de pile 3, le dispositif électronique 41 interprète ce signal d'état « fermé » comme étant un signal de présence du pack de pile 3, c'est-à-dire de présence d'un pack de pile 3 correspondant à celui attendu. Le dispositif électronique 41 se place alors en état de marche.

Si au contraire un pack de pile ne correspondant pas à celui attendu est installé sur le support 2, les éléments détecteurs 39 et 40 restent à l'état « ouvert ». Le dispositif électronique 41 interprète ce signal d'état « ouvert » comme étant un signal d'absence du pack de pile 3, c'est-à-dire d'absence d'un pack de pile 3 correspondant à celui attendu. Alors, le dispositif électronique 41 ne se met pas en état de marche. C'est le cas en particulier si le pack de pile installé ne porte pas les éléments détectables 31 et 32 ou si le couplage entre les éléments détectables 31 et 32 et les éléments détecteurs 39 et 40, par exemple magnétique, ne se produit pas.

Lorsque le pack de pile 3 est accouplé au support 2, les éléments détectables 31 et 32 et les éléments détecteurs 39 et 40 sont à une distance d1 définissant une position active.

L'effet de maintien des éléments détecteurs 39 et 40 à l'état « fermé » peut exister tant que la distance entre ces éléments détecteurs 39 et 40 et les éléments détectables 31 et 32 est comprise entre la distance d1 et une distance d2 supérieure à la distance d1.

Les éléments détectables 31 et 32 et les éléments détecteurs 39 et 40 peuvent être choisis de telle sorte que cette distance d2, définissant une position d'écartement prédéterminée, soit telle que la partie arrière du pack de pile 3 puisse être soulevée par rapport à sa partie avant sans que le pack de pile 3 puisse être complètement extrait du logement 9, le pack de pile 3 ne pouvant être complètement extrait du logement 9 que lorsque la distance entre les éléments détectables 31 et 32 et les éléments détecteurs 39 et 40 est égale ou supérieure à une distance supérieure d3, supérieure à la distance d2.

Cette distance d3, définissant une position d'écartement supérieure, peut être déterminée par une inclinaison (figures 2 et 9) du pack de pile 3 par rapport au support 2 telle que ce dernier puisse être coulissé longitudinalement au-dessus du rebord arrière 8 du support 2 pour dégager la nervure 12 du support 2 et la nervure 24 du pack de pile 3 l'une par rapport à l'autre.

Les plots 29 et 30 du pack de pile 3 et les plots 16a et 16b de l'organe de connexion électrique 16 peuvent être agencés de telle sorte que tant que la distance entre les éléments détectables 31 et 32 et les éléments détecteurs 39 et 40 est inférieure ou égale à la distance d3, les plots 29 et 30 du pack de pile 3 et les plots 16a et 16b de l'organe de connexion électrique 16 sont ou restent en contact, de telle sorte que le dispositif électronique 41 est et reste alimenté en énergie électrique jusqu'à ce que cette distance d3 soit atteinte.

Le dispositif électronique 41 peut être programmé pour détecter si le pack de pile 3 est extrait du logement 9 du support 2, par exemple par une personne malveillante.

Le dispositif électronique 41 peut être programmé pour détecter le passage de l'état « fermé » à l'état « ouvert » des éléments détecteurs 39 et 40 lorsque la distance d2 est franchie dans le sens croissant et mettre à profit l'espace de temps correspondant au déplacement du pack de pile 3 par rapport au support 2 entre les distances d2 et d3, pour par exemple envoyer un signal d'alarme par l'intermédiaire d'un circuit émetteur de signaux radio. Pendant cet espace de temps, le dispositif électronique 41 bénéficie en effet encore de l'énergie électrique de la pile électrique 18.

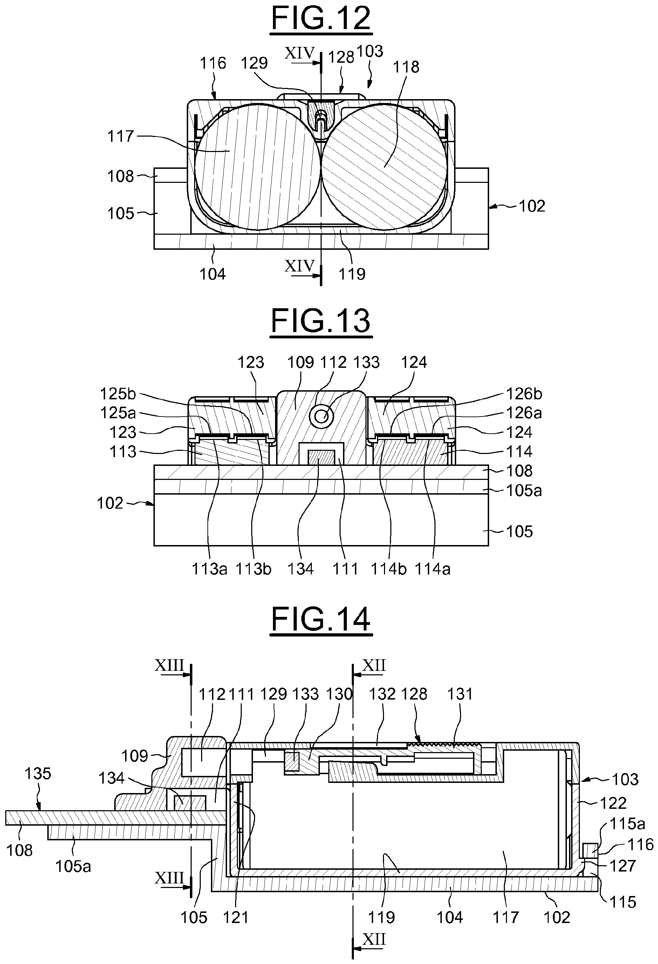

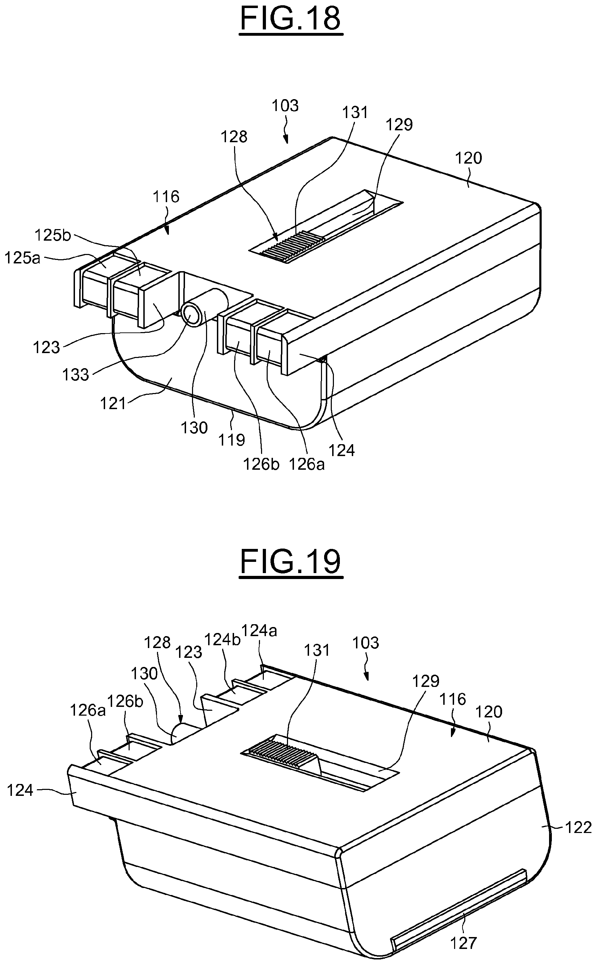

Un autre dispositif d'alimentation électrique 101 représenté sur les figures 12 à 22 comprend un support 102 et un pack de pile 103 pouvant être accouplé au support 102.

Comme illustré en particulier sur les figures 13, 16 et 17, un support 102, par exemple en une matière plastique, comprend une plateforme rectangulaire 104 munie d'un rebord transversal avant en saillie 105 et d'un rebord transversal arrière en saillie 106 de faible hauteur, délimitant un logement rectangulaire 107. Le rebord avant 105 est muni d'un rebord 105a parallèle à la plateforme 104 et s'étendant à l'opposé du logement 107. Sur le rebord 105a est fixée une plaque 108 également parallèle à la plateforme et qui s'étend jusqu'au bord du logement 107.

A mi-longueur du rebord transversal avant 105, la plaque 108 porte un bloc 109 de section transversale rectangulaire, par exemple en une matière plastique, qui présente une face transversale 110 qui s'étend dans le prolongement de la face du rebord transversal avant 105 située du côté du logement 107.

Le bloc 109 présente, du côté de la plaque 108, un évidement 111, et, au-dessus de cet évidement 111, un trou longitudinal cylindrique 112 débouchant du côté du logement 107.

De part et d'autre du bloc 109, transversalement, la plaque 108 est munie d'organes de connexion électrique 113 et 114 qui comprennent des plots de contact électrique 113a, 113b et 114a, 114b.

Le rebord arrière 106 du support 102 présente une ouverture 115 s'étendant le long de la plateforme 104 déterminant une nervure 115a.

Comme illustré en particulier sur les figures 12, 18 et 19, le pack de pile 103 comprend un carter 116 de forme générale parallélépipédique, par exemple en une matière plastique, et, selon l'exemple représenté, deux éléments d'accumulation d'énergie électrique 117 et 118 installés longitudinalement dans le carter 116 l'un à côté de l'autre.

Le carter 116 comprend une paroi plate 119, une paroi plate 120 opposée à la paroi 119, ainsi qu'une paroi transversale avant 121 et une paroi transversale arrière 122.

Le carter 116 comprend en outre deux branches longitudinales avant 123 et 124 distantes de la paroi plate 119 et espacées transversalement. Ces branches 123 et 124 sont munies de plots de contact électrique 125a, 125b et 126a, 126b, respectivement reliés aux piles électriques 117 et 118.

La paroi transversale arrière 119 présente une nervure 127 à proximité de la paroi plate 119.

Dans une position intermédiaire d'accouplement illustrée sur les figures 13 à 15, 20 et 21, le pack de pile 103 est partiellement engagé dans le logement 107 du support 102 de la manière suivante.

La paroi plate 119 du carter 116 est en appui sur la plateforme 104 du support 102. La paroi transversale avant 121 du carter 116 est contre ou à proximité du rebord avant 105 du support 102. La paroi transversale arrière 122 du carter 116 est contre ou à proximité du rebord arrière 106 du support 102, la nervure 127 de la paroi transversale arrière 122 du carter 116 étant engagée dans l'ouverture 115 du rebord arrière 106 du support 102 au-dessous de la nervure 115a. Les branches longitudinales avant 123 et 124 du carter 116 sont placées de part et d'autre du bloc 109 du support 102, avec faible jeu. Les plots de contact électrique 125a, 125b et 126a, 126b du pack de pile 103 sont respectivement en contact sur les plots de contact électrique 113a, 113b et 114a, 114b du support 102.

Pour obtenir cette position intermédiaire d'accouplement, on engage la partie arrière, puis la partie avant, du pack de pile 103 dans le logement 107 du support 102.

Dans cette position intermédiaire d'accouplement, le pack de pile 103 est maintenu longitudinalement et transversalement par rapport au support 102.

Le carter 116 du pack de pile 103 est muni, du côté de sa paroi plate 120 et dans la partie médiane de cette dernière, d'un coulisseau d'accouplement 128 mobile longitudinalement, la paroi plate 120 présentant des formes 129 adaptées à cet effet.

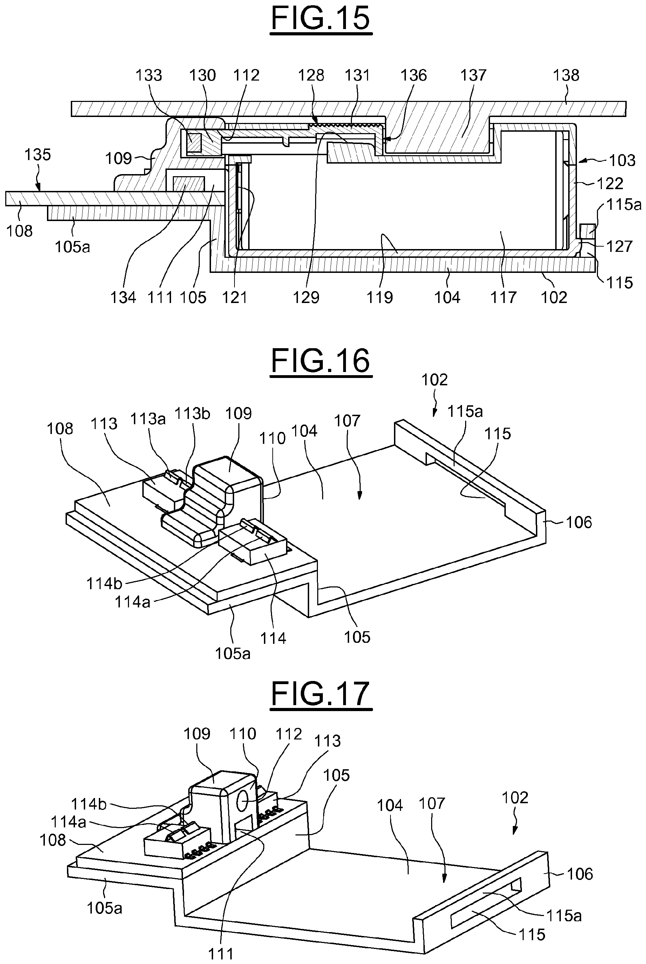

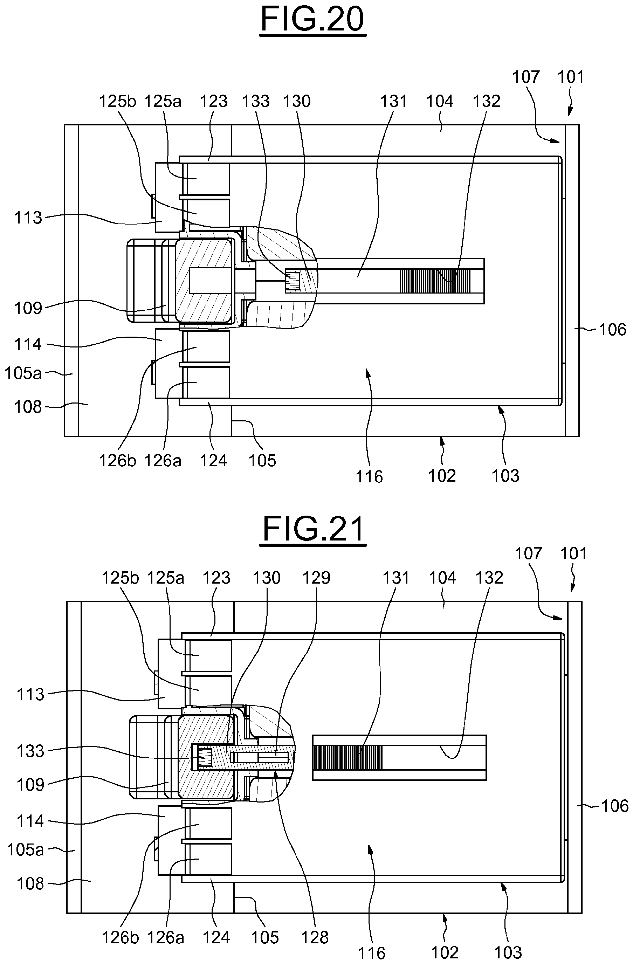

Le coulisseau d'accouplement 128 est mobile entre une position avancée (figures 15 et 21) dans laquelle une partie avant cylindrique 130 du coulisseau d'accouplement 128 est engagée longitudinalement dans le trou longitudinal 112 du bloc 109 du support 102 et une position de retrait (figures 14 et 20) dans laquelle cette partie avant 130 est à l'extérieur de ce trou longitudinal 112.

Pour qu'un utilisateur puisse déplacer manuellement le coulisseau d'accouplement 128, ce dernier présente une partie arrière 131 qui s'étend dans une ouverture 132 de la paroi plate 119, cette partie arrière 131 présentant des crans d'anti-dérapage du doigt de l'utilisateur.

Le pack de pile 103 peut être mis en place dans le logement 107 à ladite position intermédiaire d'accouplement sur le support 102 et en être extrait lorsque le coulisseau d'accouplement 128 est à sa position de retrait précitée.

Pour accoupler complètement le pack de pile 103 sur le support 102, l'utilisateur déplace le coulisseau d'accouplement 128 de sa position de retrait jusqu'à sa position avancée précitées, et réciproquement en vue d'extraire le pack de pile 103.

Comme illustré en particulier sur les figures 13 à 15, 20 et 21, l'extrémité de la partie avant 130 du coulisseau 128 du pack de pile 103 présente un trou dans lequel est inséré un élément détectable 133, par exemple formé par un aimant cylindrique, et la plaque 108 porte, à l'intérieur de l'évidement 111 du bloc 109, un élément détecteur 134, par exemple formé par un interrupteur magnétique. Cet élément détecteur 134 est disposé en correspondance longitudinale et transversale avec l'élément détectable 133 du coulisseau 128 placé à sa position avancée précitée lorsque le pack de pile 103 et le support 102 sont accouplés.

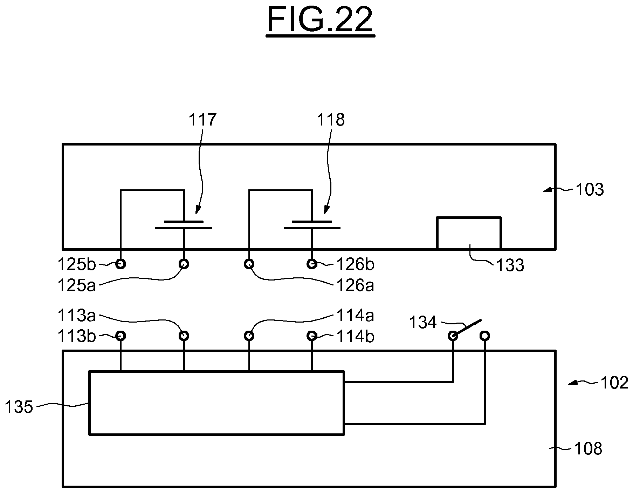

Comme illustré schématiquement en particulier sur la figure 22 et de façon équivalente à l'exemple précédent, la plaque 108 est munie d'un dispositif électronique 135 comprenant un circuit imprimé et des composants électroniques, reliés aux plots de contact électrique 113a, 113b et 114a, 114b des organes de connexion électrique 113 et 114 et à l'élément détecteur 134.

Lorsque le pack de pile 103 est absent, le dispositif électronique 135 n'est pas alimenté en énergie électrique et ne fonctionne pas et l'élément détecteur 134 formé par exemple par un interrupteur magnétique est à l'état « ouvert ».

Lorsque le pack de pile 103 est installé sur le support 102 à sa position intermédiaire d'accouplement précitée dans laquelle le coulisseau 128 est à sa position de retrait (figures 14 et 20), les piles électriques 117 et 118 sont reliées au dispositif électronique 135 par l'intermédiaire des plots de contact électrique 113a, 113b et 114a, 114b du support 102 en contact sur les plots de contact électrique 125a, 125b et 126a, 126b du pack de pile 103, mais l'élément détecteur 134 est à son état « ouvert », l'élément détectable 133 étant à une distance supérieure d3 de l'élément détecteur 134, définissant une position d'écartement supérieure. Le dispositif électronique 135, qui est alimenté en énergie électrique par les piles électriques 117 et 118 et qui détecte ce signal d'état « ouvert », ne se met pas en état de marche.

Lorsque le pack de pile 103 est accouplé au support 102 comme décrit précédemment (figures 3 et 10), les piles électriques 117 et 118 sont reliées au dispositif électronique 135 et le coulisseau 128 est à sa position avancée (figures 15 et 21). L'élément détectable 133, formé par exemple par un aimant, est alors à une distance d1, définissant une position active, par rapport à l'élément détecteur 134, plus petite que la distance d3 et agit sur l'élément détecteur 134, formé par exemple par un interrupteur magnétique. L'élément détecteur 134 est alors à l'état « fermé ». Le pack de pile 103 correspond à celui attendu. Le dispositif électronique 135, qui détecte cet état « fermé », est en marche.

Lorsque le coulisseau 128 passe dans une position intermédiaire, dans un sens ou dans l'autre, dans laquelle l'élément détectable 133 est à une distance d2 de l'élément détecteur 134 comprise entre les distances d1 et d3, l'élément détecteur 134 passe de son état « ouvert » à son état « fermé » et réciproquement.

Par exemple, dans cette position intermédiaire, l'extrémité avant de la partie avant 130 du coulisseau 128 peut être légèrement engagée dans le trou 112 du bloc 109 du support 102.

Le dispositif électronique 135 peut être programmé pour détecter si le coulisseau 128 est déplacé de sa position avancée vers sa position de retrait puis éventuellement si le pack de pile 103 du support 102 est extrait, par exemple par une personne malveillante.

Le dispositif électronique 135 peut être programmé pour détecter le passage de l'état « fermé » à l'état « ouvert » de l'élément détecteur 134 lorsque la distance d2, définissant une position d'écartement prédéterminée, est franchie dans le sens croissant et mettre à profit le passage de l'état « fermé » à « l'état ouvert » de l'élément détecteur 134, pour par exemple envoyer un signal d'alarme par l'intermédiaire d'un circuit émetteur de signaux radio, le dispositif électronique 135 bénéficiant de l'énergie électrique des piles 117 et 118 tant que le pack de pile 103 n'est pas extrait de sa position intermédiaire d'accouplement précitée.

Comme illustré sur la figure 15, lorsque le coulisseau 128 est en position avancée, il existe un espace 136 en arrière de ce dernier, dans lequel peut être engagée une partie en saillie 137 par exemple d'un couvercle 138. Ainsi, le coulisseau 128 peut être verrouillé à sa position avancée par cette partie en saillie 137.

Les dispositifs d'alimentation qui viennent d'être décrits peuvent être avantageusement installés dans des dispositifs de systèmes d'alarme tels que des centrales, des détecteurs d'intrusion, des sirènes d'alarmes, des transmetteurs téléphoniques, des détecteurs de fumée.

Selon une variante de réalisation, l'élément détecteur pourrait être un interrupteur mécanique et l'élément détectable pourrait être un doigt prévu sur le pack de pile et susceptible d'agir sur cet interrupteur mécanique. Selon une autre variante de réalisation, l'élément détecteur pourrait être un capteur capacitif et l'élément détectable pourrait être est un objet métallique porté par le pack de pile et susceptible de modifier l'état électrique de ce capteur capacitif. Selon une autre variante de réalisation, l'élément détectable pourrait être un composant électronique apte à émettre un signal codé et l'élément détecteur pourrait être un composant électronique susceptible d'activer cet élément détectable et de détecter le signal codé lorsqu'ils sont en présence l'un de l'autre. Selon une variante de réalisation, la partie mobile du pack de pile pourrait être pivotante.

En outre, les différents modes d'exécution proposés pourraient être combinés différemment.

La présente invention ne se limite pas aux exemples ci-dessus décrits. Bien d'autres variantes de réalisation sont possibles, sans sortir du cadre de l'invention.

## Revendications

1. Dispositif d'alimentation électrique comprenant un support (2) muni d'un dispositif électronique (41) à alimenter en énergie électrique et un pack de pile (3) comprenant un carter (17) et au moins un élément d'accumulation d'énergie électrique (18) disposé dans le carter,
dans lequel le support et le pack de pile comprennent des moyens (12, 13 ; 24, 27) d'accouplement et de maintien réciproques dans une position d'accouplement et sont munis de moyens de contacts électriques réciproques (16a, 16b ; 29, 30) qui sont respectivement reliés au dispositif électronique (41) et à l'élément d'accumulation d'énergie électrique (18) et qui sont en contact au moins dans ladite position d'accouplement de telle sorte que le dispositif électronique (41) soit alimenté en énergie électrique par ledit élément d'accumulation d'énergie électrique (18),
dans lequel le support est muni d'au moins un élément détecteur (39) relié au dispositif électronique (41) et le pack de pile est muni d'au moins un élément détectable (31) apte à agir sur l'élément détecteur lorsqu'ils sont en présence l'un de l'autre, l'élément détecteur (39) étant apte à délivrer au dispositif électronique (41) un signal de présence/d'absence de l'élément détectable en fonction de la présence/l'absence du pack de pile par rapport à ladite position d'accouplement de telle sorte que le dispositif électronique (41) soit en état de marche que lorsqu'il reçoit un signal de présence
**caractérisé en ce que**
l'élément détecteur est adapté pour ne délivrer un signal de présence que lorsque le support et le pack de pile sont à ladite position d'accouplement ou déplacés l'un par rapport à l'autre entre ladite position d'accouplement et une position d'écartement prédéterminée, et dans lequel les moyens d'accouplement et de maintien réciproques comprennent des moyens pour maintenir en contact lesdits moyens de contacts électriques réciproques lorsque le support et le carter du pack de pile sont déplacés l'un par rapport à l'autre entre ladite position d'accouplement et ladite position d'écartement prédéterminée et jusqu'à une position d'écartement supérieure plus éloignée de ladite position d'accouplement que ladite position d'écartement prédéterminée.

2. Dispositif d'alimentation électrique comprenant un support (2) muni d'un dispositif électronique (41) à alimenter en énergie électrique et un pack de pile (3) comprenant un carter (17) et au moins un élément d'accumulation d'énergie électrique (18) disposé dans le carter,
dans lequel le support et le pack de pile comprennent des moyens (12, 13 ; 24, 27) d'accouplement et de maintien réciproques dans une position d'accouplement et sont munis de moyens de contacts électriques réciproques (16a, 16b; 29, 30) qui sont respectivement reliés au dispositif électronique (41) et à l'élément d'accumulation d'énergie électrique (18) et qui sont en contact au moins dans ladite position d'accouplement de telle sorte que le dispositif électronique (41) soit alimenté en énergie électrique par ledit élément d'accumulation d'énergie électrique (18),
dans lequel le support est muni d'au moins un élément détecteur (39) relié au dispositif électronique (41) et le pack de pile est muni d'au moins un élément détectable (31) apte à agir sur l'élément détecteur lorsqu'ils sont en présence l'un de l'autre, l'élément détecteur (39) étant apte à délivrer au dispositif électronique (41) un signal de présence/d'absence de l'élément détectable en fonction de la présence/l' absence du pack de pile par rapport à ladite position d'accouplement de telle sorte que le dispositif électronique (41) ne soit en état de marche que lorsqu'il reçoit un signal de présence
dans lequel le carter du pack de pile comprend une partie mobile (128) portant l'élément détectable (133) et l'élément détecteur (134) est adapté pour ne délivrer un signal de présence que lorsque cette partie mobile est déplacée entre une position active et une position d'écartement prédéterminée par rapport à cette position active, et dans lequel les moyens d'accouplement et de maintien réciproques comprennent des moyens pour maintenir en contact lesdits moyens de contact électrique réciproques lorsque la partie mobile est déplacée entre ladite position active et ladite position d'écartement prédéterminée et jusqu'à une position d'écartement supérieure plus éloignée de ladite position d'accouplement que ladite position d'écartement prédéterminée.

3. Dispositif selon la revendication 2, dans lequel ladite partie mobile comprend un coulisseau (128).

4. Dispositif selon l'une des revendications 2 et 3, dans lequel ladite partie mobile coopère avec une partie (109) du support pour maintenir le carter à ladite position d'accouplement lorsqu'elle est à ladite position active ou déplacée jusqu'à ladite position d'écartement supérieure.

5. Dispositif selon l'une quelconque des revendications précédentes, dans lequel le dispositif électronique (41) est apte à détecter les états et les changements d'état de l'élément détecteur.

6. Dispositif selon la revendication 5, dans lequel le dispositif électronique est apte à générer un signal d'alarme lorsque l'élément détectable franchit dans le sens croissant une distance d'écartement prédéterminée par rapport à l'élément détecteur.

7. Dispositif selon l'une quelconque des revendications précédentes, dans lequel l'élément détecteur est un interrupteur magnétique ou un composant magnéto-résistif et l'élément détectable est un aimant.

8. Dispositif selon l'une quelconque des revendications 1 à 6, dans lequel l'élément détecteur est un interrupteur mécanique et l'élément détectable est un doigt.

9. Dispositif selon l'une quelconque des revendications 1 à 6, dans lequel l'élément détecteur est un capteur capacitif et l'élément détectable est un objet métallique.

10. Dispositif selon l'une quelconque des revendications 1 à 6, dans lequel l'élément détecteur est un composant électronique de réception et de décodage et l'élément détectable est un composant électronique apte à émettre un signal codé.

11. Pack de pile pour un dispositif selon l'une quelconque des revendications précédentes, comprenant un carter (17 ; 116) et au moins un élément d'accumulation d'énergie électrique (18 ; 117, 118) disposé dans le carter, le carter (17 ; 116) étant muni de moyens de contact électrique extérieur (29, 30 ; 124a, 124b, 125a, 125b, 126a, 126b) reliés à l'élément d'accumulation (18 ; 117, 118) et comprenant des moyens d'accouplement et de maintien (24, 27 ; 127, 128) destinés à l'accouplement et au maintien du carter (17 ; 116) sur un support étant muni d'un dispositif électronique (41 ; 135) à alimenter en énergie électrique et d'au moins un élément détecteur (39 ; 134) relié au dispositif électronique (41 ; 135), le support étant muni de moyens d'accouplement et de maintien (12, 13 ; 112, 115) réciproques aux moyens d'accouplement et de maintien (24, 27 ; 127, 128) du carter (17 ; 116) dans une position d'accouplement, le support et le pack de pile étant munis de moyens de contacts réciproques (16a, 16b, 29, 30 ; 113a, 113b, 114a, 114b, 124a, 124b, 125a, 125b, 126a, 126b) qui sont respectivement reliés au dispositif électronique (41 ; 135) et à l'élément d'accumulation d'énergie électrique (18 ; 117, 118) et qui sont en contact au moins dans ladite position d'accouplement, le carter étant muni d'au moins un élément détectable (31 ; 133) destiné à être détecté par au moins un élément détecteur (39 ; 134) du support lorsque cet élément détecteur (39 ; 134) est en présence de l'élément détectable, l'élément détecteur (39 ; 134) étant apte à délivrer au dispositif électronique (41 ; 135) un signal de présence/d'absence de l'élément détectable (31 ; 133) en fonction de la présence/l'absence du pack de pile par rapport à ladite position d'accouplement de telle sorte que le dispositif électronique (41 ; 135) ne soit en état de marche que lorsqu'il reçoit un signal de présence, dans lequel
soit l'élément détecteur (39) est adapté pour ne délivrer un signal de présence que lorsque le support et le pack de pile sont à ladite position d'accouplement ou déplacés l'un par rapport à l'autre entre ladite position d'accouplement et une position d'écartement prédéterminée, et dans lequel les moyens d'accouplement et de maintien réciproques (12, 13, 24, 27) comprennent des moyens pour maintenir en contact lesdits moyens de contacts électriques réciproques (16a, 16b, 29, 30) lorsque le support et le carter du pack de pile sont déplacés l'un par rapport à l'autre entre ladite position d'accouplement
et ladite position d'écartement prédéterminée et jusqu'à une position d'écartement supérieure plus éloignée de ladite position d'accouplement que ladite position d'écartement prédéterminée
soit le carter du pack de pile comprend une partie mobile (128) portant l'élément détectable (133) et l'élément détecteur (134) est adapté pour ne délivrer un signal de présence que lorsque cette partie mobile (128) est déplacée entre une position active et une position d'écartement prédéterminée par rapport à cette position active, et dans lequel les moyens d'accouplement et de maintien réciproques (112, 115, 127, 128) comprennent des moyens pour maintenir en contact lesdits moyens de contact électrique réciproques (113a, 113b, 114a, 114b, 124a, 124b, 125a, 125b, 126a, 126b) lorsque la partie mobile (128) est déplacée entre ladite position active et ladite position d'écartement prédéterminée et jusqu'à une position d'écartement supérieure plus éloignée de ladite position d'accouplement que ladite position d'écartement prédéterminée .

12. Pack de pile selon la revendication 11, dans lequel l'élément détectable est solidaire du carter.

13. Pack de pile selon la revendication 11, dans lequel la partie mobile est un coulisseau.

14. Pack de pile selon l'une des revendications 11 à 13, présentant un espace (136) pour la réception d'une partie (137) de verrouillage de ladite partie mobile à une position avancée.

15. Pack de pile selon l'une quelconque des revendications 11 à 14, dans lequel l'élément détectable comprend un aimant, un doigt, un objet métallique ou un composant électronique.

## Patentansprüche

1. Vorrichtung zur Versorgung mit elektrischer Energie, umfassend einen Träger (2), der mit einer mit elektrischer Energie zu versorgenden elektronischen Vorrichtung (41) versehen ist, und ein Batteriepack (3), welches ein Gehäuse (17) und mindestens ein Element (18) zur Speicherung elektrischer Energie umfasst, das in dem Gehäuse angeordnet ist,
wobei der Träger und das Batteriepack Mittel (12, 13; 24, 27) zum gegenseitigen Koppeln und Halten in einer Kopplungsposition umfassen und mit gegenseitigen elektrischen Kontaktmitteln (16a, 16b; 29, 30) versehen sind, die jeweils mit der elektronischen Vorrichtung (41) und mit dem Element (18) zur Speicherung elektrischer Energie verbunden sind, und die mindestens in der Kopplungsposition derart in Kontakt stehen, dass die elektronische Vorrichtung (41) durch das Element (18) zur Speicherung elektrischer Energie mit elektrischer Energie versorgt wird,
wobei der Träger mit mindestens einem Detektorelement (39) versehen ist, das mit der elektronischen Vorrichtung (41) verbunden ist, und das Batteriepack mit mindestens einem detektierbaren Element (31) versehen ist, das geeignet ist, auf das Detektorelement einzuwirken, wenn diese gegenseitig anwesend sind, wobei das Detektorelement (39) geeignet ist, an die elektronische Vorrichtung (41) ein Signal der Anwesenheit/Abwesenheit des detektierbaren Elements in Abhängigkeit von der Anwesenheit/Abwesenheit des Batteriepacks in Bezug auf die Kopplungsposition derart zu liefern, dass die elektronische Vorrichtung (41) im Betriebszustand ist, wenn diese ein Anwesenheitssignal empfängt, **dadurch gekennzeichnet, dass**
das Detektorelement geeignet ist, nur dann ein Anwesenheitssignal zu liefern, wenn der Träger und das Batteriepack in der Kopplungsposition oder zwischen der Kopplungsposition und einer vorherbestimmten Abstandsposition voneinander verschoben sind, und wobei die gegenseitigen Kopplungs- und Haltemittel Mittel umfassen, um die gegenseitigen elektrischen Kontaktmittel in Kontakt zu halten, wenn der Träger und das Batteriepack zwischen der Kopplungsposition und der vorherbestimmten Abstandsposition und bis zu einer größeren Abstandsposition voneinander verschoben sind, die von der Kopplungsposition weiter entfernt ist als die vorherbestimmte Abstandsposition.

2. Vorrichtung zur Versorgung mit elektrischer Energie,
umfassend einen Träger (2), der mit einer mit elektrischer Energie zu versorgenden elektronischen Vorrichtung (41) versehen ist, und ein Batteriepack (3), welches ein Gehäuse (17) und mindestens ein Element (18) zur Speicherung elektrischer Energie umfasst, das in dem Gehäuse angeordnet ist,
wobei der Träger und das Batteriepack Mittel (12, 13; 24, 27) zum gegenseitigen Koppeln und Halten in einer Kopplungsposition umfassen und mit gegenseitigen elektrischen Kontaktmitteln (16a, 16b; 29, 30) versehen sind, die jeweils mit der elektronischen Vorrichtung (41) und mit dem Element (18) zur Speicherung elektrischer Energie verbunden sind, und die mindestens in der Kopplungsposition derart in Kontakt stehen, dass die elektronische Vorrichtung (41) durch das Element (18) zur Speicherung elektrischer Energie mit elektrischer Energie versorgt wird,
wobei der Träger mit mindestens einem Detektorelement (39) versehen ist, das mit der elektronischen Vorrichtung (41) verbunden ist, und das Batteriepack mit mindestens einem detektierbaren Element (31) versehen ist, das geeignet ist, auf das Detektorelement einzuwirken, wenn diese gegenseitig anwesend sind, wobei das Detektorelement (39) geeignet ist, an die elektronische Vorrichtung (41) ein Signal der Anwesenheit/Abwesenheit des detektierbaren Elements in Abhängigkeit von der Anwesenheit/Abwesenheit des Batteriepacks in Bezug auf die Kopplungsposition derart zu liefern, dass die elektronische Vorrichtung (41) nur im Betriebszustand ist, wenn diese ein Anwesenheitssignal empfängt, wobei das Gehäuse des Batteriepacks einen bewegbaren Teil (128) umfasst, der das detektierbare Element (133) trägt, und das Detektorelement (134) geeignet ist, nur dann ein Anwesenheitssignal zu liefern, wenn dieser bewegbare Teil zwischen einer aktiven Position und einer vorherbestimmten Abstandsposition in Bezug auf diese aktive Position verschoben ist, und wobei die gegenseitigen Kopplungs- und Haltemittel Mittel umfassen, um die gegenseitigen elektrischen Kontaktmittel in Kontakt zu halten, wenn der bewegbare Teil zwischen der aktiven Position und der vorherbestimmten Abstandsposition und bis zu einer größeren Abstandsposition verschoben ist, die von der Kopplungsposition weiter entfernt ist als die vorherbestimmte Abstandsposition.

3. Vorrichtung nach Anspruch 2,
wobei der bewegbare Teil einen Schlitten (128) umfasst.

4. Vorrichtung nach einem der Ansprüche 2 und 3,
wobei der bewegbare Teil mit einem Teil (109) des Trägers zusammenwirkt, um das Gehäuse in der Kopplungsposition zu halten, wenn er in der aktiven Position oder bis zu der größeren Abstandsposition verschoben ist.

5. Vorrichtung nach einem der vorhergehenden Ansprüche,
wobei die elektronische Vorrichtung (41) geeignet ist, die Zustände und Zustandsänderungen des Detektorelements zu detektieren.

6. Vorrichtung nach Anspruch 5,
wobei die elektronische Vorrichtung geeignet ist, ein Alarmsignal zu generieren, wenn das detektierbare Element in zunehmendem Maß eine vorherbestimmte Abstandsdistanz in Bezug auf das Detektorelement überschreitet.

7. Vorrichtung nach einem der vorhergehenden Ansprüche,
wobei das Detektorelement ein magnetischer Unterbrecher oder eine magnetoresistive Komponente ist und das detektierbare Element ein Magnet ist.

8. Vorrichtung nach einem der Ansprüche 1 bis 6,
wobei das Detektorelement ein mechanischer Unterbrecher ist und das detektierbare Element ein Finger ist.

9. Vorrichtung nach einem der Ansprüche 1 bis 6,
wobei das Detektorelement ein kapazitiver Sensor ist und das detektierbare Element ein metallisches Objekt ist.

10. Vorrichtung nach einem der Ansprüche 1 bis 6,
wobei das Detektorelement eine elektronische Empfangs- oder Decodierungskomponente ist, und das detektierbare Element eine elektronische Komponente ist, die ausgelegt ist, ein codiertes Signal zu senden.

11. Batteriepack für eine Vorrichtung nach einem der vorhergehenden Ansprüche, umfassend ein Gehäuse (17; 116) und mindestens ein Element (18; 117, 118) zur Speicherung elektrischer Energie, das in dem Gehäuse angeordnet ist, wobei das Gehäuse (17; 116) mit äußeren elektrischen Kontaktmitteln (29, 30; 124a, 124b, 125a, 125b, 126a, 126b) versehen ist, die mit dem Speicherelement (18; 117, 118) verbunden sind und Kopplungs- und Haltemittel (24, 27; 127, 128) umfassen, welche zur Kopplung und zum Halten des Gehäuses (17; 116) auf einem Träger bestimmt sind, der mit einer mit elektrischer Energie zu versorgenden elektronischen Vorrichtung (41; 135) und mindestens einem Detektorelement (39; 134) versehen ist, das mit der elektronischen Vorrichtung (41; 135) verbunden ist, wobei der Träger mit Mitteln (12, 13; 112, 115) zum gegenseitigen Koppeln und Halten von Kopplungs- und Haltemitteln (24, 27; 127; 128) des Gehäuses (17; 116) in einer Kopplungsposition versehen ist, wobei der Träger und das Batteriepack mit gegenseitigen Kontaktmitteln (16a, 16b, 29, 30; 113a, 113b, 114a, 114b, 124a, 124b, 125a, 125b, 126a, 126b) versehen sind, die jeweils mit der elektronischen Vorrichtung (41; 135) und mit dem Element (18; 117, 118) zur Speicherung elektrischer Energie verbunden sind und die mindestens in der Kopplungsposition in Kontakt stehen, wobei das Gehäuse mit mindestens einem detektierbaren Element (31; 133) versehen ist, das dazu bestimmt ist, von mindestens einem Detektorelement (39; 134) des Trägers detektiert zu werden, wenn dieses Detektorelement (39; 134) in Anwesenheit des detektierbaren Elements ist, wobei das Detektorelement (39; 134) geeignet ist, an die elektronische Vorrichtung (41; 135) ein Signal der Anwesenheit/Abwesenheit des detektierbaren Elements (31; 135) in Abhängigkeit von der Anwesenheit/Abwesenheit des Batteriepacks in Bezug auf die Kopplungsposition derart zu liefern, dass die elektronische Vorrichtung (41; 135) nur dann im Betriebszustand ist, wenn sie ein Anwesenheitssignal empfängt, wobei
entweder das Detektorelement (39) ausgelegt ist, nur dann ein Anwesenheitssignal zu liefern, wenn der Träger und das Batteriepack in der Kopplungsposition oder zwischen der Kopplungsposition und einer vorherbestimmten Abstandsposition voneinander verschoben sind, und wobei die gegenseitigen Kopplungs- und Haltemittel (12, 13, 24, 27) Mittel zum Halten der gegenseitigen elektrischen Kontaktmittel (16a, 16b, 29, 30) in Kontakt umfassen, wenn der Träger und das Gehäuse des Batteriepacks zwischen der Kopplungsposition und der vorherbestimmten Abstandsposition und bis zu einer größeren Abstandsposition voneinander verschoben sind, die von der Kopplungsposition weiter entfernt ist als die vorherbestimmte Abstandsposition, oder das Gehäuse des Batteriepacks einen bewegbaren Teil (128) umfasst, der das detektierbare Element (133) trägt, und das Detektorelement (134) ausgelegt ist, nur dann ein Anwesenheitssignal zu liefern, wenn dieser bewegbare Teil (128) zwischen einer aktiven Position und einer vorherbestimmten Abstandsposition in Bezug auf diese aktive Position verschoben ist, und wobei die gegenseitigen Kopplungs- und Haltemittel (112, 115, 127, 128) Mittel umfassen, um die gegenseitigen elektrischen Kontaktmittel (113a, 113b, 114a, 114b, 124a, 124b, 125a, 125b, 126a, 126b) in Kontakt zu halten, wenn der bewegbare Teil (128) zwischen der aktiven Position und der vorherbestimmten Abstandsposition und bis zu einer größeren Abstandsposition verschoben ist, die von der Kopplungsposition weiter entfernt ist als die vorherbestimmte Abstandsposition.

12. Batteriepack nach Anspruch 11,
wobei das detektierbare Element mit dem Gehäuse fest verbunden ist.

13. Batteriepack nach Anspruch 11,
wobei der bewegbare Teil ein Schlitten ist.

14. Batteriepack nach einem der Ansprüche 11 bis 13,
welches einen Raum (136) zur Aufnahme eines Teils (137) zur Verriegelung des bewegbaren Teils in einer vorgeschobenen Position aufweist.

15. Batteriepack nach einem der Ansprüche 11 bis 14,
wobei das detektierbare Element einen Magneten, einen Finger, ein metallisches Objekt oder eine elektronische Komponente umfasst.

## Claims

1. Electric power supply device, comprising a support (2) provided with an electronic device (41) to be supplied with electric power and a battery pack (3) comprising a housing (17) and at least one electric power accumulation element (18) disposed inside the housing,
wherein the support and the battery pack comprise complementary means (12, 30; 24, 27) for coupling and retaining in a coupling position and are provided with complementary electric contact means (16a, 16b; 29, 30) that are respectively connected to the electronic device (41) and to the electric power accumulation element (18) and that are in contact at least in said coupling position so that the electronic device (41) is supplied with electric power by said electric power accumulation element (18),
wherein the support is provided with at least one detector element (39) connected to the electronic device (41) and the battery pack is provided with at least one detectable element (31) capable of acting on the detector element when they are in the presence of each other, the detector element (39) being capable of supplying the electronic device (41) with a presence/absence signal of the detectable element as a function of the presence/absence of the battery pack relative to said coupling position, such that the electronic device (41) is in an operating state only when it receives a presence signal, **characterised in that** the detector element is adapted to deliver a presence signal only when the support and the battery pack are in said coupling position or are moved relative to each other between said coupling position and a predetermined clearance position, and wherein the complementary coupling and retaining means comprise means for keeping said complementary electric contact means in contact when the support and the housing of the battery pack are moved relative to each other between said coupling position and said predetermined clearance position and up to an upper clearance position that is further away from said coupling position than said predetermined clearance position.

2. Electric power supply device, comprising a support (2) provided with an electronic device (41) to be supplied with electric power and a battery pack (3) comprising a housing (17) and at least one electric power accumulation element (18) disposed inside the housing,
wherein the support and the battery pack comprise complementary means (12, 13; 24, 27) for coupling and retaining in a coupling position and are provided with complementary electric contact means (16a, 16b; 29, 30) that are respectively connected to the electronic device (41) and to the electric power accumulation element (18) and that are in contact at least in said coupling position so that the electronic device (41) is supplied with electric power by said electric power accumulation element (18),
wherein the support is provided with at least one detector element (39) connected to the electronic device (41) and the battery pack is provided with at least one detectable element (31) capable of acting on the detector element when they are in the presence of each other, the detector element (39) being capable of supplying the electronic device (41) with a presence/absence signal of the detectable element as a function of the presence/absence of the battery pack relative to said coupling position, such that the electronic device (41) is in an operating state only when it receives a presence signal,
wherein the housing of the battery pack comprises a movable part (128) currying the detectable element (133) and the detector element (134) is adapted to deliver a presence signal only when this movable part is moved between an active position and a predetermined clearance position relative to this active position, and wherein the complementary coupling and retaining means comprise means for keeping said complementary electric contact means in contact when the movable part is moved between said active position and said predetermined clearance position and up to an upper clearance position that is further away from said coupling position than said predetermined clearance position.

3. Device according to claim 2, wherein said movable part comprises a slide (128).

4. Device according to any one of claims 2 to 3, wherein said movable part cooperates with part (109) of the support in order to retain the housing in said coupling position when it is in said active position or is moved to said upper clearance position.

5. Device according to any one of the preceding claims, wherein the electronic device (41) is capable of detecting the states and the changes of state of the detector element.

6. Device according to claim 5, wherein the electronic device is capable of generating an alarm signal when the detectable element upwardly exceeds a predetermined clearance distance relative to the detector element.

7. Device according to any one of the preceding claims, wherein the detector element is a magnetic switch or a magneto-resistive component and the detectable element is a magnet.

8. Device according to any one of claims 1 to 6, wherein the detector element is a mechanical switch and the detectable element is a pin.

9. Device according to any one of claims 1 to 6, wherein the detector element is a capacitive sensor and the detectable element is a metal object.

10. Device according to any one of claims 1 to 6, wherein the detector element is an electronic receiving and decoding component and the detectable element is an electronic component capable of transmitting a coded signal.

11. Battery pack for a device according to any one of the preceding claims, comprising a housing (17; 116) and at least one electric power accumulation element (18; 117, 118) disposed inside the housing, the housing (17; 116) being provided with external electric contact means (29, 30; 124a, 124b, 125a, 125b, 126a, 126b) connected to the accumulation element (18; 117, 118) and comprising coupling and retaining means (24, 27; 127, 128) intended for coupling and retaining the housing (17; 116) on a support provided with an electronic device (41; 135) to be supplied with electric power and at least one detector element (39; 134) connected to the electronic device (41; 135), the support being provided with coupling and retaining means (12, 13; 112, 115) complementing the coupling and retaining means (24, 27; 127, 128) of the housing (17; 116) in a coupling position, the support and the battery pack being provided with complementary contact means (16a, 16b, 29, 30; 113a, 113b, 114a, 114b, 124a, 124b, 125a, 125b, 126a, 126b) that are respectively connected to the electronic device (41; 135) and to the electric power accumulation element (18; 117, 118) and that are in contact at least in said coupling position, the housing being provided with at least one detectable element (31; 133) intended to be detected by at least one detector element (39; 134) of the support when this detector element (39; 134) is in the presence of the detectable element, the detector element (39; 134) being capable of supplying the electronic device (41; 135) with a presence/absence signal of the detectable element (31; 133) as a function of the presence/absence of the battery pack relative to said coupling position, such that the electronic device (41; 135) is in an operating state only when it receives a presence signal, wherein either the detector element (39) is adapted to deliver a presence signal only when the support and the battery pack are in said coupling position or are moved relative to each other between said coupling position and a predetermined clearance position, and wherein the complementary coupling and retaining means (12, 13, 24, 27) comprise means for keeping said complementary electric contact means (16a, 16b, 29, 30) in contact when the support and the battery pack housing are moved relative to each other between said coupling position and said predetermined clearance position and up to an upper clearance position further away from said coupling position than said predetermined clearance position, or the housing of the battery pack comprises a movable part (128) carrying the detectable element (133) and the detector element (134) is adapted to deliver a presence signal only when this movable part (128) is moved between an active position and a predetermined clearance position relative to this active position, and wherein the complementary coupling and retaining means (112, 115, 127, 128) comprise means for keeping said complementary electric contact means (113a, 113b, 114a, 114b, 124a, 124b, 125a, 125b, 126a, 126b) in contact when the movable part (128) is moved between said active position and said predetermined clearance position and up to an upper clearance position further away from said coupling position than said predetermined clearance position.

12. Battery pack according to claim 11, wherein the detectable element is integral with the housing.

13. Battery pack according to claim 11, wherein the movable part is a slide.

14. Battery pack according to any one of claims 11 to 13, having a space (136) for receiving a part (137) for locking said movable part in a forward position.

15. Battery pack according to any one of claims 11 to 14, wherein the detectable element comprises a magnet, a pin, a metallic object or an electronic component.
